# EUROPEAN PATENT SPECIFICATION

(11) **EP 4 458 534 B1**
(45) Date of publication and mention of the grant of the patent: **21.10.2026**
(21) Application number: 24161664.8
(22) Date of filing: 06.03.2024
(51) Int. Cl.: B26D 1/00, G05B 19/19, B26D 3/06, B26D 1/45, B25J 11/00, B26D 7/08, B26D 7/26

(54) **ULTRASONIC CUTTING BLADES AND SYSTEMS AND METHODS FOR CUTTING WORKPIECES**
ULTRASCHALL-SCHNEIDKLINGEN UND SYSTEME UND VERFAHREN ZUM SCHNEIDEN VON WERKSTÜCKEN
LAMES DE COUPE À ULTRASONS ET SYSTÈMES ET PROCÉDÉS DE COUPE DE PIÈCES

(30) Priority: 31.03.2023 US 202318193746
(43) Date of publication of application: 06.11.2024
(60) Divisional application: 24215068.8 / 4 492 169
(73) Proprietor: The Boeing Company, Arlington, VA 22202 (US)
(72) Inventor: FRITZKE, Ricardo A., Arlington, 22202 (US); BALL, Austin B., Arlington, 22202 (US); BROWN, Christopher R., Arlington, 22202 (US); ARTHUR, Shane E., Arlington, 22202 (US); WILKINSON, Marianne E., Arlington, 22202 (US); AHN, Jonathan Y., Arlington, 22202 (US)
(74) Representative: Arnold & Siedsma

(56) References cited:
- EP-A1- 1 932 636
- US-A1- 2005 081 692
- US-A1- 2019 175 207

## Description

### FIELD

The present disclosure relates generally to ultrasonic cutting and, more particularly, to ultrasonic cutting blades and systems and methods for cutting workpieces using the ultrasonic cutting blades.

### BACKGROUND

In many manufacturing operations, a material workpiece is shaped for a particular application. For example, a workpiece used to fill a gap must be suitably shaped for that gap. Often, the workpiece is cut or trimmed to achieve a desired shape. Typically, an edge tool, an ultrasonic cutter, a water jet, or the like is used for the cutting. Use of an ultrasonic cutter has advantages. However, it can be challenging to trim, cut, or otherwise shape a three-dimensional curved surface in the workpiece using conventional cutting techniques. Accordingly, those skilled in the art continue with research and development efforts in the field of ultrasonic cutting.

US 2019/175207 A1, according to its abstract, states a surgical method utilizes a cutting blade having a thickness along a cutting edge of between about 13 micron and about 508 micron (about 0.0005 inch and about 0.020 inch). The blade is moved in contact with relatively hardly tissues which are disposed adjacent to softer tissues at a surgical site in a patient. The blade is ultrasonically vibrated during the moving of the blades, whereby the hard tissue is cut with a modicum of damage being inflicted on the soft tissue.

US 2019/175207 A1 further describes, in paragraphs [0042] - [0057] thereof, inter alia, a cutting blade for use in ultrasonically assisted surgery includes an integral shank portion having an external screw thread for replaceably mounting the blade to a probe. The blade includes a planar blade body having a thickness. The blade body is provided at an end opposite shank with a blade or cutting edge including a central circularly arcuate section and a pair of linear end sections. The edge is continuous along a full radius of arcuate section, as well as along the straight sections. The blade has a thickness along the cutting edge of between about 13 micron and about 508 micron (about 0.0005 inch and about 0.020 inch). Beveled or tapered surfaces extend from the body portion to the edge. The cutting edge is disposed, as is the entire blade body, in a single plane. Upon an activation of the ultrasound unit, the blade begins to vibrate and irrigation fluid is introduced simultaneously. Blade edge is then brought into contact with hard tissue at a preselected surgical site. The vibrating blade is moved in a continuous stroke over the incision site to cut or remove tissue to a desired depth. After termination of the stroke, the power to the ultrasound unit is shut off and blade is removed from the surgical site.

US 2021/146564 A1, according to its abstract, states an ultrasonic cutter for the cutting of edge chamfers of plate-shaped workpieces, having a cutter head which forms an axis of rotation and having a blade, which extends from the cutter head and forms a cutting wedge, terminating in a straight cutting edge, between flank and contact faces determined by the wedge angle. In order to create advantageous structural conditions, it is proposed that the axis of rotation extending on the blade side of the flank face is at a distance from the flank face which is equal to or greater than the distance of the centre of mass of the blade from the flank face, and that the cutting edge extending in the direction of the axis of rotation extends at a distance from the axis of rotation which corresponds at most to the blade thickness.

### SUMMARY

Presently claimed is an ultrasonic cutting blade according to claim 1 and a method for cutting a workpiece with such cutting blade according to claim 14.

Disclosed are examples of an ultrasonic cutting blade, an ultrasonic cutting system, a method for cutting a workpiece, and a method for reducing chatter during an ultrasonic cutting operation. The following is a non-exhaustive list of examples, which may or may not be claimed, of the subject matter according to the present disclosure.

In an example, the disclosed ultrasonic cutting blade includes a first end, a second end, and a curved body. The curved body extends between the first end and the second end. The curved body includes a first edge that is configured to contact a workpiece for performing a cutting operation on the workpiece. The curved body includes a radius of curvature that varies between a minimum radius of curvature and a maximum radius of curvature.

Optionally, the curved body is axisymmetric.

Optionally, the curved body comprises a first arcuate section that extends from the first end to a vertex of the curved body; and a second arcuate section that extends from the vertex to the second end; the minimum radius of curvature is at the vertex; and the maximum radius of curvature is proximate at least one of the first end and the second end.

Optionally, the radius of curvature increases linearly from the minimum radius of curvature to the maximum radius of curvature.

Optionally, the radius of curvature increases exponentially from the minimum radius of curvature to the maximum radius of curvature.

Optionally, the ultrasonic cutting blade further comprises a longitudinal axis; a second edge that is opposite the first edge; and a surface that extends between the first edge and the second edge, wherein: the second edge is spaced away from the first edge along the longitudinal axis; and the surface is oriented at oblique angle relative to the longitudinal axis. Preferably, the surface is concave.

Optionally, the maximum radius of curvature is at least 2 times greater than the minimum radius of curvature.

Optionally, the maximum radius of curvature is at least 4 times greater than the minimum radius of curvature.

Optionally, the maximum radius of curvature is at least 5 times greater than the minimum radius of curvature.

Optionally, the maximum radius of curvature is at least 7 times greater than the minimum radius of curvature.

Optionally, the maximum radius of curvature is at least 10 times greater than the minimum radius of curvature.

Optionally, the minimum radius of curvature is approximately 6.3 mm (approximately 0.25 inch); and the maximum radius of curvature is up to approximately 38.1 mm (approximately 1.5 inches).

Optionally, the first edge is configured to make an arcuate cut in the workpiece) in response to moving the ultrasonic cutting blade along a cut path; the arcuate cut has a cut radius of curvature; and the cut radius of curvature is between the minimum radius of curvature and the maximum radius of curvature based on a cutting angle of the curved body relative to a workpiece surface of the workpiece.

Optionally, the ultrasonic cutting blade further comprises a first shank extending from the first end of the curved body; and a second shank extending from the second end of the curved body, wherein the first shank and the second shank are couplable to a blade holder that couples the ultrasonic cutting blade to a source of ultrasonic vibrations.

In an example, the disclosed ultrasonic cutting system includes an ultrasonic cutting blade and an ultrasonic cutting tool that transmits ultrasonic vibrations to the ultrasonic cutting blade. The ultrasonic cutting blade includes a first end, a second end, and a curved body. The curved body extends between the first end and the second end. The curved body includes a first edge that is configured to contact a workpiece for performing a cutting operation on the workpiece. The curved body includes a radius of curvature that varies between a minimum radius of curvature and a maximum radius of curvature. Preferably, the ultrasonic cutting blade is an ultrasonic cutting blade according to the above.

Optionally, the ultrasonic cutting system further comprises a blade holder that couples the ultrasonic cutting blade to the ultrasonic cutting tool. Preferably, the ultrasonic cutting blade further comprises: a first tang.k extending from the first end of the curved body, and a second shank extending from the second end of the curved body; further wherein the blade holder comprises a tang; and the first shank and the second shank are coupled to the tang.

Optionally, ultrasonic cutting system further comprises at least one of an articulated robot and a gantry that moves the ultrasonic cutting tool.

Optionally, the ultrasonic cutting system further comprises any one of the above optional features of the ultrasonic cutting blade.

In an example, the disclosed method for cutting includes steps of: (1) positioning an ultrasonic cutting blade at a cutting angle relative to a workpiece surface of the workpiece; (2) moving the ultrasonic cutting blade along cut path to form an arcuate cut; (3) during the moving, changing the cutting angle of the ultrasonic cutting blade; and (4) varying a cut radius of curvature of the arcuate cut between a minimum radius of curvature and a maximum radius of curvature based on the changing of the cutting angle.

In an example, a workpiece is provided that comprises an arcuate cut formed according to the above method.

In an example, the disclosed method for reducing chatter includes steps of: (1) transferring ultrasonic vibrations through two contact interfaces between an ultrasonic cutting blade and a blade holder that connects the ultrasonic cutting blade to a source of the ultrasonic vibrations; and (2) reacting to deflection of the ultrasonic cutting blade through the two contact interfaces.

Other examples of the ultrasonic cutting blade, the ultrasonic cutting system, the method for cutting, and the method for reducing chatter disclosed herein will become apparent from the following detailed description, the accompanying drawings, and the appended claims.

### BRIEF DESCRIPTION OF THE DRAWINGS

Fig. 1 is a schematic block diagram of an example of a manufacturing environment;
Fig. 2 is schematic, front elevation view of an example of an ultrasonic cutting blade of Fig. 1;
Fig. 3 is schematic, front elevation view of an example of the ultrasonic cutting blade of Fig. 1;
Fig. 4 is schematic, perspective view of an example of the ultrasonic cutting system of Fig. 1;
Fig. 5 is schematic, front elevation view of an example of a portion of the ultrasonic cutting system of Fig. 1;
Fig. 6 is schematic, front perspective view of an example of the portion of the ultrasonic cutting system of Fig. 4;
Fig. 7 is schematic, exploded, perspective view of an example of the portion of the ultrasonic cutting system of Fig. 4;
Fig. 8 is schematic, elevation view of an example of the ultrasonic cutting blade of Fig. 1;
Fig. 9 is schematic, perspective view of an example of the ultrasonic cutting blade of Fig. 7;
Fig. 10 is a schematic, perspective view of an example of a workpiece of Fig. 1;
Fig. 11 is a schematic, perspective view of an example of the workpiece of Fig. 9 having an arcuate cut made using the ultrasonic cutting system of Fig. 1;
Fig. 12 is a schematic, perspective view of an example of the workpiece of Fig. 9 being cut by the ultrasonic cutting system of Fig. 1;

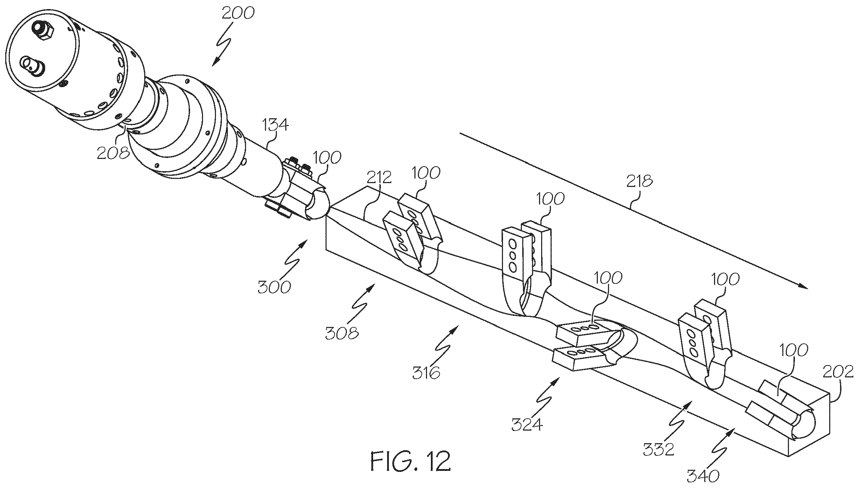

Figs. 12 is a schematic, end view of an example of the ultrasonic cutting system of Fig. 12;

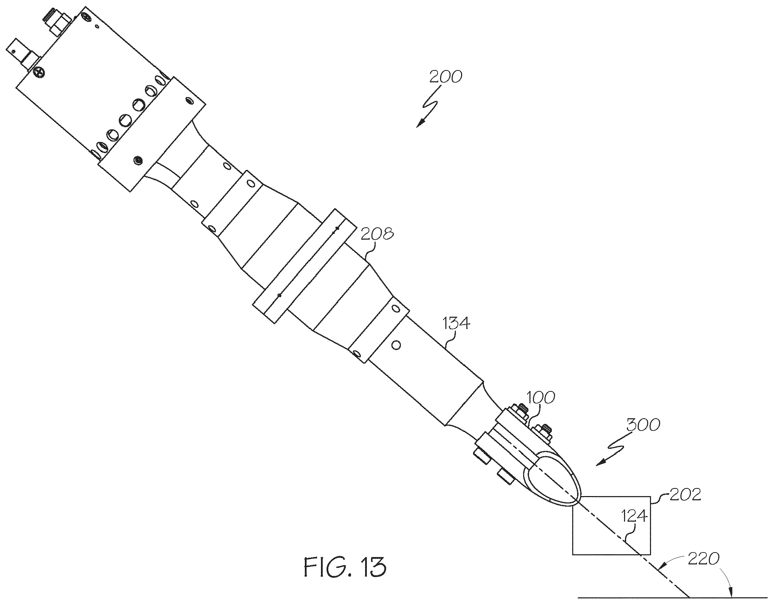

Fig. 13 is a schematic, end view of an example of the ultrasonic cutting system of Fig. 12 at an initial cutting location and position relative to a workpiece;

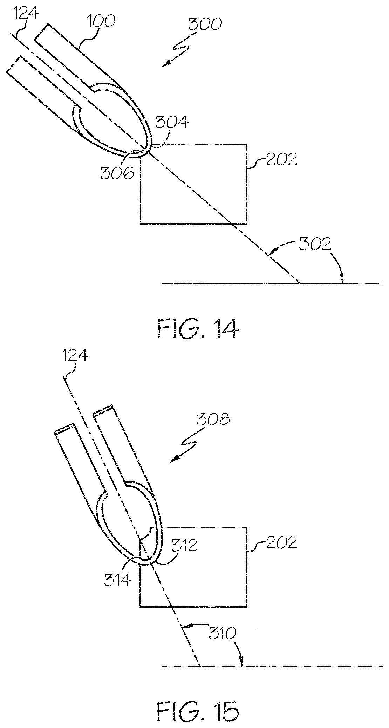

Figs. 14-19 are schematic, end views of examples of the ultrasonic cutting blade of Fig. 12 in various cutting positions and at various cutting locations relative to the workpiece;

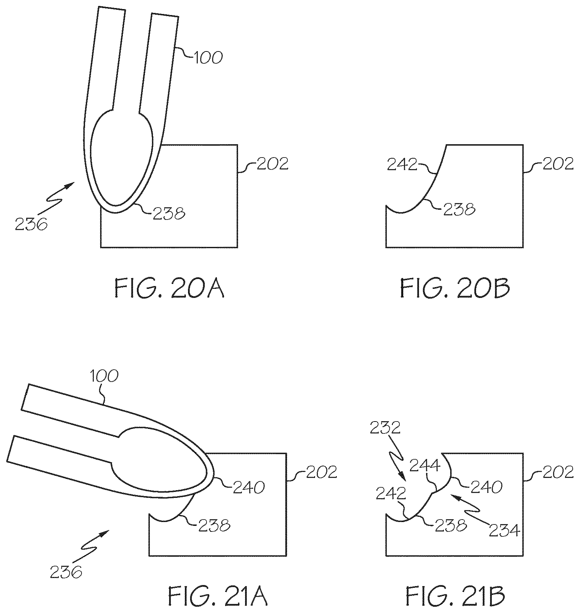

Fig. 20A is a schematic, end view of an example of the ultrasonic cutting blade at a cutting location and in a cutting position relative to the workpiece;
Fig. 20B is a schematic, end view of an example of the workpiece of Fig. 20A after being cut by the ultrasonic cutting blade;
Fig. 21A is a schematic, end view of an example of the ultrasonic cutting blade at the cutting location of Fig. 20A and in another cutting position relative to the workpiece;
Fig. 21B is a schematic, end view of an example of the workpiece of Fig. 21A after being cut by the ultrasonic cutting blade;

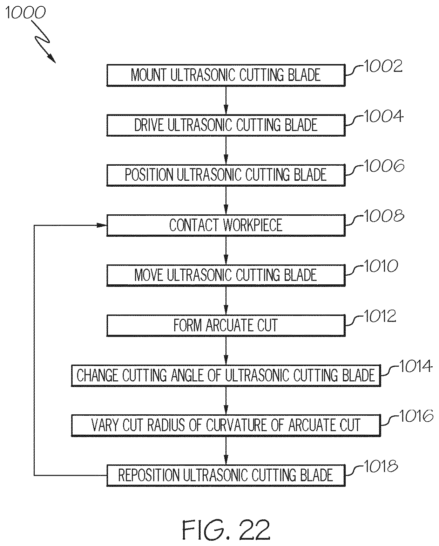

Fig. 22 is a flow diagram of an example of a method for cutting a workpiece;

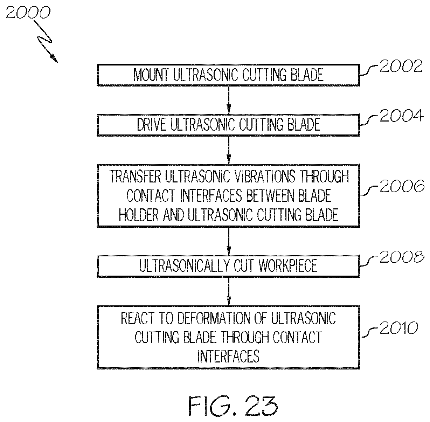

Fig. 23 is a flow diagram of an example of a method for reducing chatter during an ultrasonic cutting operation;

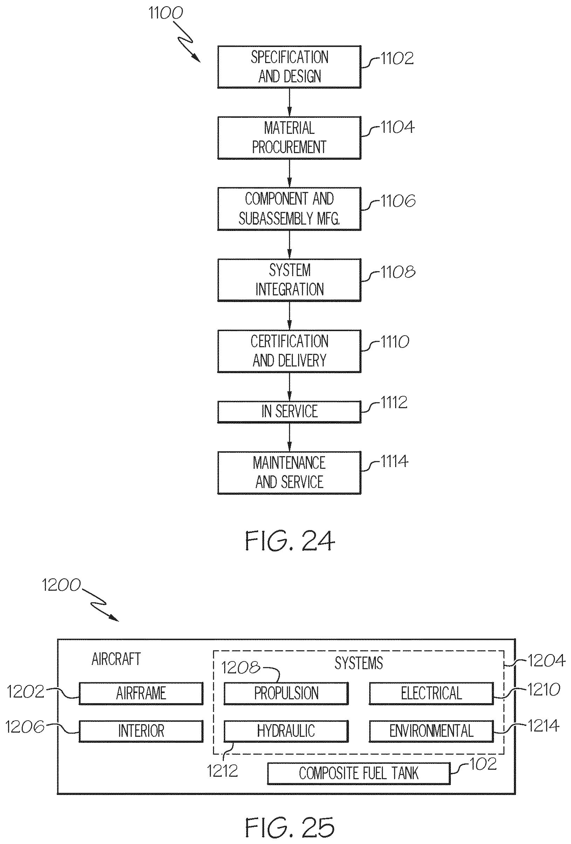

Fig. 24 is a flow diagram of an example of an aircraft manufacturing and service method; and
Fig. 25 is a schematic block diagram of an example of an aircraft.

### DETAILED DESCRIPTION

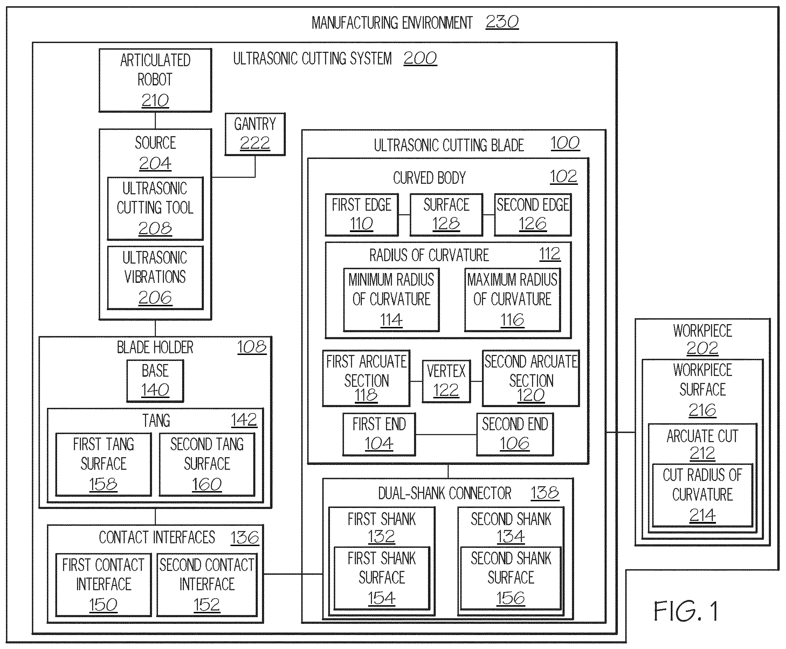

Referring generally to Figs. 1-21, by way of examples, the present disclosure is directed to an ultrasonic cutting blade 100 and to an ultrasonic cutting system 200, which includes or otherwise utilizes the ultrasonic cutting blade 100. As will be described in more detail herein, the ultrasonic cutting blade 100 provides a varying cutting radius to cut a workpiece 202 and, thereby, form a three-dimensional curved surface or a cut with a varying cut radius. During an ultrasonic cutting operation, the ultrasonic cutting blade 100 is oriented (e.g., tilted) to change the radius of the cut and, thereby, facilitates cuts of an adaptive or changing radius of curvature along a cut path. Additionally, the ultrasonic cutting blade 100 facilitates a reduction in chatter during the ultrasonic cutting operation.

Generally, the workpiece 202 refers to or includes any object, article, component, part, etc. that is being cut, trimmed, shaped, or otherwise worked on by the ultrasonic cutting blade 100. The workpiece 202 can have any one of various sizes, shapes, and/or geometries. The workpiece 202 can be made of any one or more of various materials including, but not limited to: composite materials, such as a stack of uncured ("green") composite plies, a fiber-reinforced composite, a resin infused composite, and the like; foam materials; soft metallic materials, such as a stack of aluminum sheets; a laminate of metallic and composite sheets; and the like. In one or more examples, the workpiece 202 having an arcuate cut with an adaptive cut radius can be used as a radius filler, also referred to as a noodle, to effectively fill a noodle cavity of a composite blade stringer, thereby increasing gap pull up allowance and avoiding the use of step cuts to form the contoured or curved shape of the noodle.

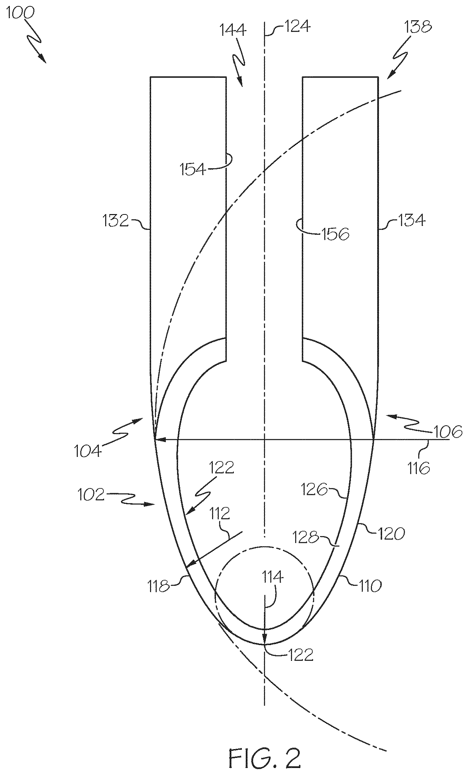

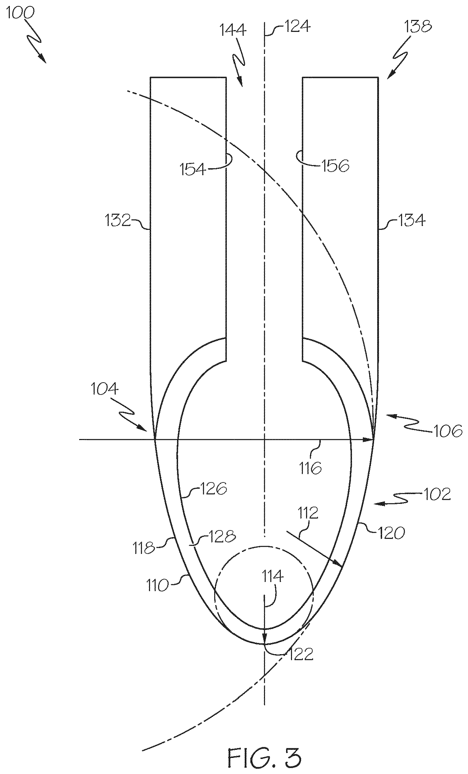

Fig. 1 schematically illustrates a manufacturing environment 230 in which the ultrasonic cutting operation is performed on the workpiece 202. Generally, the ultrasonic cutting operation refers to or includes any cutting, trimming, or shaping operation performed on the workpiece 202 using the ultrasonic cutting blade 100. Figs. 2 and 3 schematically illustrate examples of the ultrasonic cutting blade 100.

Referring to Figs. 1-3, in one or more examples, the ultrasonic cutting blade 100 includes a first end 104, a second end 106, and a curved body 102. The curved body 102 extends between the first end 104 and the second end 106. In one or more examples, the first end 104 and the second end 106 are at least approximately parallel to each other. In other examples, the first end 104 and the second end 106 are non-parallel to each other. In one or more examples, the first end 104 and the second end 106 are opposite each other and aligned along an axis that is transverse to the longitudinal axis 124. The curved body 102 includes a first edge 110. The first edge 110 is configured to contact the workpiece 202 for performing the ultrasonic cutting operation (also referred to herein as a cutting operation or cutting) on the workpiece 202. The curved body 102 includes a radius of curvature 112. The radius of curvature 112 varies between a minimum radius of curvature 114 and a maximum radius of curvature 116.

As an example, a value for the radius of curvature 112 at any location along the curved body 102 varies between a minimum radius value and a maximum radius value. For example, the curved body 102 includes a plurality of values for or instances of the radius of curvature 112 and each value or instance is different than at least one other value or instance of the radius of curvature 112 along a curve profile of the curved body 102 and/or of the first edge 110.

As illustrated in Figs. 2 and 3, the curved body 102 of the ultrasonic cutting blade 102 has an open curve profile shape, in elevation view. As such, the curved body 102 and/or the first edge 110 can be described as having a U-shape or having a parabolic shape. The ultrasonic cutting blade 100 can also be referred to as a ring blade.

In one or more examples, the first edge 110 is relatively thin and sharp for performing the cutting. As such, the first edge 110 can also be referred to as a cutting edge, a belly, or a blade edge. The first edge 110 of the curved body 102 also includes the radius of curvature 112, in which the values or instances of the radius of curvature 112 vary at different points along the curve profile of the first edge 110 between the minimum radius of curvature 114 and the maximum radius of curvature 116.

Generally, radius of curvature refers to the radius of a circular arc that best approximates a curve at a point along a curve profile of a curved body, such as that of the curved body 102 of the first edge 110 (e.g., as shown in Figs. 2 and 3). The radius of curvature 112 (e.g., a value for the radius of curvature) varies along the curve profile of the curved body 102, or along the first edge 110. As an example, the radius of curvature 112 at any point along the curved body 102, or along the first edge 110, is different than the radius of curvature 112 at another point, or any other point, along the curved body 102, or along the first edge 110.

Referring to Figs. 1-3, in one or more examples, the ultrasonic cutting blade 100 includes a longitudinal axis 124. During the ultrasonic cutting operation, the ultrasonic cutting blade 100 oscillates axially along the longitudinal axis 124. During the ultrasonic cutting operation, the ultrasonic cutting blade 100 is moved in a moving direction, for example, along a cut path 218, and the first edge 110 is aligned with the moving direction.

Referring to Figs. 1-3, in one or more examples, the curved body 102 and/or the first edge 110 is axisymmetric about the longitudinal axis 124. In one or more examples, the ultrasonic cutting blade 100 is axisymmetric about the longitudinal axis 124 (i.e., the longitudinal axis 124 is the axis of symmetry). In one or more examples, symmetry of the ultrasonic cutting blade 100, the curved body 102, and/or the first edge 110 facilitates a reduction in chatter during the ultrasonic cutting operation. In other examples, the curved body 102 and/or the first edge 110 is not symmetric, for example, is not axisymmetric about the longitudinal axis 124 (e.g., an axis of symmetry).

Referring to Figs. 1-3, in one or more examples, the curved body 102 and/or the first edge 110 includes a first arcuate section 118 and a second arcuate section 120. The first arcuate section 118 extends from the first end 104 to a vertex 122 of the curved body 102. The second arcuate section 120 extends from the vertex 122 to the second end 106. The minimum radius of curvature 114 is at the vertex 122. The vertex 122 refers to the vertex of the U-shaped or parabolic curve profile of the curved body 102 or to a point of intersection of the curve profile of the curved body 102 and/or the first edge 110 and the axis of symmetry (e.g., the longitudinal axis 124). In one or more examples, the maximum radius of curvature 116 is proximate at least one of the first end 104 and the second end 106 of the curved body 102. In other examples, the maximum radius of curvature 116 may be located at another point along the curved body 102 and/or the first edge 110.

In one or more examples, the maximum radius of curvature 116 of the first arcuate section 118 and the maximum radius of curvature 116 of the second arcuate section 120 are the same and are located at opposing points on the curved body 102, such as when the curved body 102 is symmetric. In other examples, the maximum radius of curvature 116 of the first arcuate section 118 and the maximum radius of curvature 116 of the second arcuate section 120 are different and/or are located at different points on the curved body 102, such as when the curved body 102 is not symmetric.

Referring to Figs. 1-3, in one or more examples, the radius of curvature 112 increases from the minimum radius of curvature 114 to the maximum radius of curvature 116 along the curved body 102 from the vertex 122 to proximate the first end 104. In one or more examples, the radius of curvature 112 increases from the minimum radius of curvature 114 to the maximum radius of curvature 116 along the curved body 102 from the vertex 122 to proximate the second end 106 of the curved body 102. In one or more examples, the radius of curvature 112 increases from the minimum radius of curvature 114 to the maximum radius of curvature 116 along the curved body 102 from the vertex 122 to proximate the first end 104 and proximate the second end 106, respectively. In other examples, the radius of curvature 112 increases from the minimum radius of curvature 114 to the maximum radius of curvature 116 and then decreases from the maximum radius of curvature 116 toward the minimum radius of curvature 114.

In one or more examples, the radius of curvature 112 increases linearly from the minimum radius of curvature 114 to the maximum radius of curvature 116. In one or more examples, the radius of curvature 112 increases exponentially from the minimum radius of curvature 114 to the maximum radius of curvature 116. The manner of increase of the radius of curvature 112 from the minimum radius of curvature 114 to the maximum radius of curvature 116 may depend on various factors, such as, but not limited to, the type, geometry, and/or purpose of the cut being made in the workpiece 202, the material composition of the workpiece 202, and the like.

In one or more examples, the maximum radius of curvature 116 is at least 2 times greater than the minimum radius of curvature 114. In one or more examples, the maximum radius of curvature 116 is at least 4 times greater than the minimum radius of curvature 114. In one or more examples, the maximum radius of curvature 116 is at least 5 times greater than the minimum radius of curvature 114. In one or more examples, the maximum radius of curvature 116 is at least 7 times greater than the minimum radius of curvature 114. In one or more examples, the maximum radius of curvature 116 is at least 10 times greater than the minimum radius of curvature 114.

In one or more examples, the minimum radius of curvature 114 is approximately 0.25 inch (approximately 6.3 millimeters). In one or more examples, the maximum radius of curvature 116 is up to approximately 1.5 inches (approximately 38.1 millimeters), such as up to approximately 3.5 inches (approximately 88.9 millimeters). However, other minimum and maximum values for the radius of curvature 112 are also contemplated depending on the application of the ultrasonic cutting blade 100.

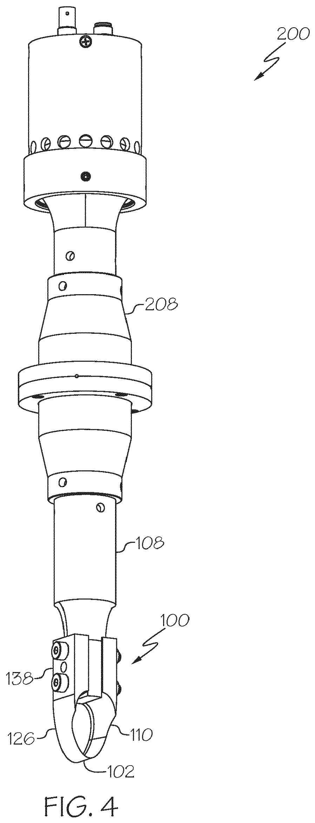

Referring to Figs. 1 and 4-7, in one or more examples, the ultrasonic cutting blade 100 includes a dual-shank connector 138 for connection to a blade holder 108. The blade holder 108 couples the ultrasonic cutting blade 100 to a source 204 of ultrasonic vibrations 206, such as an ultrasonic cutting tool 208 (Fig. 4). The blade holder 108 transfers the ultrasonic vibrations 206 from the source 204 (e.g., the ultrasonic cutting tool 208) to the ultrasonic cutting blade 100. The blade holder 108 may also be referred to as a horn.

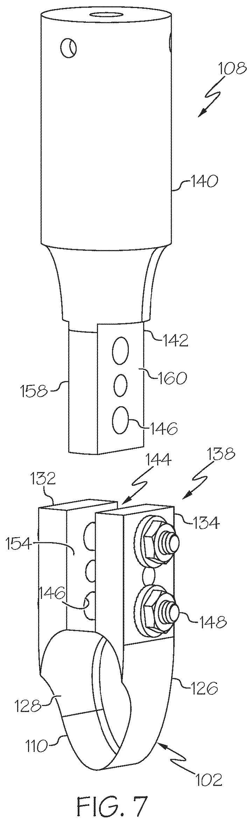

In one or more examples, the blade holder 108 includes a base 140 and a tang 142. The base 140 is coupled to the source 204 of ultrasonic vibrations 206, such as the ultrasonic cutting tool 208 (Fig. 4), by any suitable coupling technique, such as by a threaded connection, a clamp, a chuck, or the like. The tang 142 extends from the base 140 and is coupled to the dual-shank connector 138 of the ultrasonic cutting blade 100. For example, the tang 142 fits between a space 144 (Fig. 7) within the dual-shank connector 138.

Referring to Figs. 1 and 5-7, in one or more examples, the ultrasonic cutting blade 100 (e.g., the dual-shank connector 138) includes a first shank 132 and a second shank 134. The first shank 132 extends from the curved body 102 at the first end 104. The second shank 134 extends from the curved body 102 at the second end 106. The first shank 132 and the second shank 134 are opposite each other. In one or more examples, the first shank 132 and the second shank 134 are at least approximately parallel to each other. In one or more examples, the first shank 132 and the second shank 134 are non-parallel to each other. In one or more examples, the first shank 132 and the second shank 134 are opposite each other and aligned along an axis that is transverse to the longitudinal axis 124. The first shank 132 and the second shank 134 are couplable to the blade holder 108.

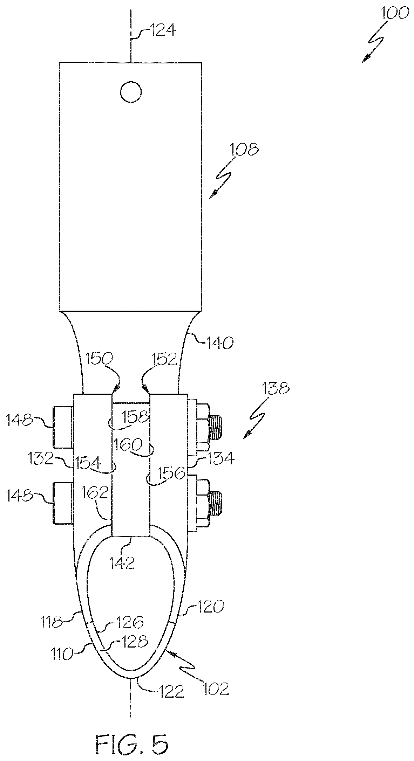

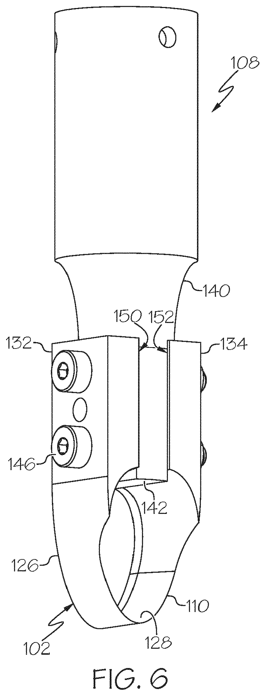

In one or more examples, the tang 142 fits within the space 144 (Fig. 7) between the first shank 132 and the second shank 134. Each one of the first shank 132, the second shank 134, and the tang 142 includes fastener apertures 146. The first shank 132, the second shank 134, and the tang 142 are coupled together by fasteners 148 (e.g., threaded fasteners, such as bolts) that extend through the fastener apertures 146 of the first shank 132, the second shank 134, and the tang 142 (as shown in Figs. 5 and 6).

In one or more examples, the dual-shank connector 138 takes the form of a clevis and, as such, the first shank 132 takes the form of a first clevis arm and the second shank 134 takes the form of a second clevis arm. The tang 142 is configured to be located between and to be coupled to the first clevis arm and the second clevis arm by one or more of the fasteners 148.

Referring to Figs. 1 and 4-7, in one or more examples, the ultrasonic vibrations 206 are generated by the ultrasonic cutting tool 208. The ultrasonic vibrations 206 are transferred to the blade holder 108. The ultrasonic vibrations 206 are transferred from the blade holder 108 to the ultrasonic cutting blade 100. In one or more examples, the ultrasonic vibrations 206 are transferred through two contact interfaces 136 between blade holder 108 and the ultrasonic cutting blade 100. In one or more examples, deflection of the ultrasonic cutting blade 100 is also reacted by or through the two contact interfaces 136. Transferring the ultrasonic vibrations 206 and reacting to the deformation through the two contact interfaces 136 reduces chatter during the ultrasonic cutting operation.

In one or more examples, the two contact interfaces 136 includes a first contact interface 150 and a second contact interface 152. The first contact interface 150 includes or is formed by intimate, engaging surface-to-surface contact between a first shank surface 154 of the first shank 132 and a first tang surface 158 of the tang 142. The second contact interface 152 includes or is formed by intimate, engaging surface-to-surface contact between a second shank surface 156 of the first shank 132 and a second tang surface 160 of the tang 142.

The contact interfaces 136 provide an increase in contact surface area between the first shank 132, the second shank 134, and the tang 142. The increase in the contact surface area optimizes the transmission of the ultrasonic vibrations 206 compared to a single connection, such as traditional ultrasonic blade holders. The increase in the contact surface area also reduces deflection compared to a single connection, such as traditional ultrasonic blade holders. Optimization of the transmission of the ultrasonic vibrations 206 and reduction of the deflection of the ultrasonic cutting blade 100 result in a reduction in chatter. It can be appreciated that chatter can result in poor cut quality and/or premature blade breakage.

In one or more examples, during connection of the ultrasonic cutting blade 100 to the blade holder 108, the curved body 102 is capable of flexing inward, in a direction at least approximately perpendicular to the longitudinal axis 124, thereby enabling the dual-shank connector 138 to clamp down on the tang 142. The clamping force increases surface contact and improves transmission of the ultrasonic vibrations 206 to the ultrasonic cutting blade 100, thereby reducing chatter.

In one or more examples, the contact interfaces 136 include a gel 162 (Fig. 5). The gel 162 includes any suitable ultrasound coupling medium or ultrasonic gel. The gel further optimizes the transmission of the ultrasonic vibrations 206 and, thereby, further reduces chatter. As an example, the gel 162 is applied between the first shank surface 154 and the first tang surface 158 and between the second shank surface 156 and the second tang surface 160.

Referring to Figs. 1-3, 8 and 9, in one or more examples, the curved body 102 includes a second edge 126. The second edge 126 is opposite the first edge 110. The curved body 102 includes a surface 128 that extends between the first edge 110 and the second edge 126.

In one or more examples, the second edge 126 is relatively thick and dull and may form the thickest and strongest part of the curved body 102. As such, the first edge 110 can also be referred to as a spine. The second edge 126 of the curved body 102 may also include the radius of curvature 112.

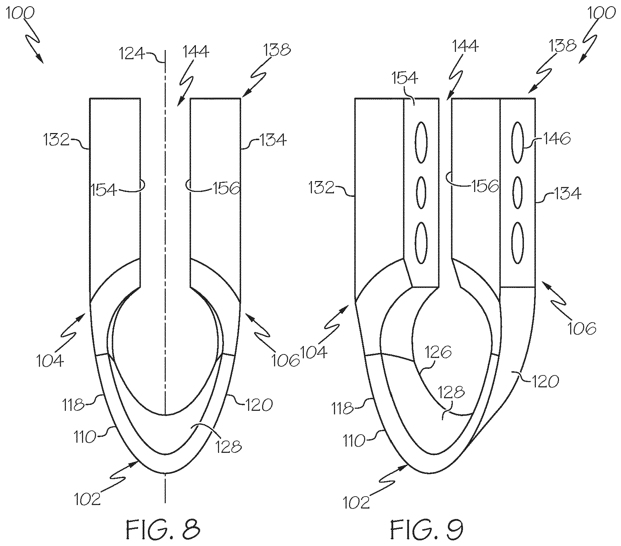

Referring to Figs. 1, 8 and 9, in one or more examples, the second edge 126 is spaced away from the first edge 110 along the longitudinal axis 124. For example, the second edge 126 is positioned radially inward relative to the first edge 110, in elevation view (e.g., as shown in Fig. 8). The surface 128 is oriented at oblique angle relative to the longitudinal axis 124. In one or more examples, the surface 128 is concave in a direction extending between the first edge 110 and the second edge 126. In these examples, the ultrasonic cutting blade 100, such as the surface 128 of the curved body 102, may be referred to as being shoveled or scooped.

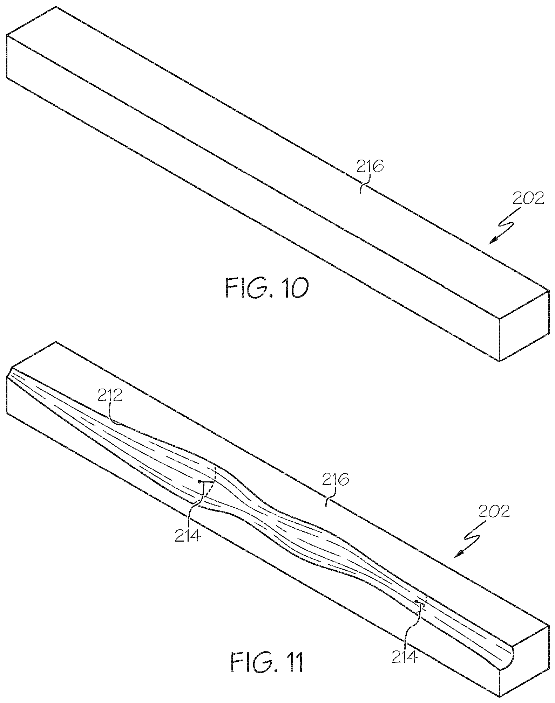

Referring to Figs. 1 and 10-19, in one or more examples, the first edge 110 is configured to make an arcuate cut 212 (Fig. 11) in the workpiece 202 in response to moving the ultrasonic cutting blade 100 along the cut path 218 (Fig. 12). The arcuate cut 212 has a cut radius of curvature 214. The cut radius of curvature 214 is between (e.g., can vary between) the minimum radius of curvature 114 and the maximum radius of curvature 116 based on a cutting angle 220 (Fig. 12) of the curved body 102 relative to the workpiece 202 or a workpiece surface 216 of the workpiece 202.

Referring to Fig. 1, in one or more examples, the ultrasonic cutting system 200 includes the ultrasonic cutting blade 100 and the ultrasonic cutting tool 208. In one or more examples, the ultrasonic cutting system 200 includes the blade holder 108 that couples the ultrasonic cutting blade 100 to the ultrasonic cutting tool 208. The ultrasonic cutting tool 208 transmits the ultrasonic vibrations 206 to the ultrasonic cutting blade 100 via the blade holder 108. The ultrasonic cutting blade 100 includes the first end 104, the second end 106, and the curved body 102. The curved body 102 extends between the first end 104 and the second end 106. In one or more examples, the first end 104 and the second end 106 are generally aligned with each other across the longitudinal axis 124, such as at least approximately parallel. The curved body 102 includes the first edge 110 that is configured to contact the workpiece 202 for performing the cutting operation on the workpiece 202. The curved body 102 includes the radius of curvature 112 that varies between the minimum radius of curvature 114 and the maximum radius of curvature 116.

In one or more examples, the ultrasonic cutting tool 208 is an example of the source 204 of the ultrasonic vibrations 206. The ultrasonic cutting tool 208 includes any suitable ultrasonic oscillator that is configured or adapted to be driven to vibrate in a direction of the longitudinal axis 124 and, thereby, ultrasonically vibrating the ultrasonic cutting blade 100.

In one or more examples, the ultrasonic cutting system 200 includes at least one of an articulated robot 210 and a gantry 222 that moves the ultrasonic cutting tool 208. As an example, the ultrasonic cutting tool 208 is mounted on an end of the articulated robot 210. As an example, the ultrasonic cutting tool 208 is mounted on the gantry 222. In one or more examples, the articulated robot 210 includes or takes the form of any programmable robot, such as a robotic arm. In one or more examples, the articulated robot 210 is a six-axis articulated robot that has six degrees of freedom, such that both a location and an orientation of the ultrasonic cutting blade 100 can be controlled freely in three-dimensional space. In one or more examples, the gantry 222 is an overhead gantry that includes a manipulator to which the ultrasonic cutting tool 208 is coupled.

Referring generally to Figs. 1-19 and particularly to Fig. 22, by way of examples, the present disclosure is directed to a method 1000 for cutting the workpiece 202. In one or more examples, the method 1000 is implemented or performed using the ultrasonic cutting system 200 that utilizes the ultrasonic cutting blade 100.

Referring to Fig. 22, in one or more examples, the method 1000 includes a step of (block 1002) mounting or coupling the ultrasonic cutting blade 100 to the source 204 of the ultrasonic vibrations 206, such as to the ultrasonic cutting tool 208. In one or more examples, ultrasonic cutting blade 100 is coupled to the source 204 via the blade holder 108. In one or more examples, the method 1000 includes a step of (block 1004) driving the ultrasonic cutting blade 100 via the source 204 of the ultrasonic vibrations 206. In one or more examples, the ultrasonic vibrations 206 are generated by the source 204 (e.g., the ultrasonic cutting tool 208), are transmitted through the blade holder 108 to the ultrasonic cutting blade 100, and travel through and along the ultrasonic cutting blade 100 such that the ultrasonic cutting blade 100 is ultrasonically vibrated. In one or more examples, the method 1000 includes a step of (block 1006) positioning the ultrasonic cutting blade 100 at the cutting angle 220 relative to the workpiece surface 216 of the workpiece 202 in order to set an initial orientation of the ultrasonic cutting blade 100 and, more particularly, the orientation of the first edge 110 relative to the workpiece 202. In one or more examples, the method 1000 includes a step of (block 1008) contacting the workpiece 202 with the first edge 110 of the ultrasonic cutting blade 100. In one or more examples, the method 1000 includes a step of (block 1010) moving the ultrasonic cutting blade 100 along the cut path 218. In one or more examples, the method 1000 includes a step of (block 1012) forming the arcuate cut 212 in the workpiece 202. Generally, the step of (block 1012) forming the arcuate cut 212 in the workpiece 202 includes cutting or trimming away portions of the workpiece 202 using the ultrasonic cutting blade 100. In one or more examples, the step of (block 1010) moving the ultrasonic cutting blade 100 is performed during the step of (block 1004) driving the ultrasonic cutting blade 100 and with the ultrasonic cutting blade 100 positioned at the cutting angle 220 (e.g., after the step of (block 1006) positioning the ultrasonic cutting blade 100). In other words, the step of (block 1004) driving, the step of (block 1006) positioning, and the step of (block 1010) moving the ultrasonic cutting blade 100 along the cut path 218 form or result in formation of the arcuate cut 212. In one or more examples, the method 1000 includes a step of (block 1014) changing or modifying the cutting angle 220 of the ultrasonic cutting blade 100 in order to reposition the orientation of the ultrasonic cutting blade 100 and, more particularly, the orientation of the first edge 110 relative to the workpiece 202. In one or more examples, the step of (block 1014) changing the cutting angle 220 is performed during the step of (block 1004) driving the ultrasonic cutting blade 100 and the step of (block 1010) moving the ultrasonic cutting blade 100 and during the step of (block 1012) forming the arcuate cut 212. In one or more examples, the method 1000 includes a step of (block 1016) varying the cut radius of curvature 214 of the arcuate cut 212 between the minimum radius of curvature 114 and the maximum radius of curvature 116 based on the step of (block 1014) changing of the cutting angle 220. In other words, the step of (block 1004) driving the ultrasonic cutting blade 100, the step of (block 1010) moving the ultrasonic cutting blade 100, and the step of (block 1014) changing the cutting angle 220 of the ultrasonic cutting blade 100 during the step of (block 1012) forming the arcuate cut 212 in the workpiece 202 form or result in variations in the cut radius of curvature 214 of the arcuate cut 212 along the cut path 218.

Variations in the cut radius of curvature 214 of the actuate cut 212 provide an adaptive, three-dimensional curved surface in the workpiece 202. Examples of the method 1000 and the ultrasonic cutting blade 100, disclosed herein, advantageously enable formation of at least one arcuate cut 212 having a desired cut radius of curvature 214 or variations in the cut radius of curvature 214 after a single cutting pass of the ultrasonic cutting blade 100. The cut radius of curvature 214 and/or or variations in the cut radius of curvature 214 are controllable between a minimum radius and a maximum radius depending on the cutting angle 220 of the ultrasonic cutting blade 100 and the radius of curvature 112 of the ultrasonic cutting blade 100.

Fig. 10 illustrates an example of the workpiece 202 before the ultrasonic cutting operation. Fig. 11 illustrates an example of the workpiece 202 after the ultrasonic cutting operation in which the workpiece 202 includes the arcuate cut 212 and the arcuate cut 212 has the cut radius of curvature 214 that varies between the minimum radius of curvature 114 and the maximum radius of curvature 116. Fig. 12 illustrates an example implementation of the method 1000. More particularly, Fig. 12 illustrates an example of the ultrasonic cutting blade 100 oriented at different instances of the cutting angle 220 at different locations on the workpiece 202 as the ultrasonic cutting blade 100 is moved along the cut path 218. Figs. 13-19 illustrate examples of the ultrasonic cutting blade 100 at the different locations depicted in Fig. 12 and at the different instances of the cutting angle 220 associated with different portions of the arcuate cut 212 having the cut radius of curvature 214 corresponding to the cutting angle 220.

Fig. 13 illustrates an example of the ultrasonic cutting system 200, including the ultrasonic cutting tool 208, the blade holder 108, and the ultrasonic cutting blade 100, in a position, such as a first position 300 (also shown in Fig. 12), for example, when first contacting the workpiece 202 (e.g., block 1008 of the method 1000). In the cutting position, the ultrasonic cutting blade 100 is oriented at the cutting angle 220. As will be described below and illustrated in Figs. 14-19, at any one of the subsequent cutting positions along the cut path 218, the ultrasonic cutting blade 100 can be oriented at a different instance of the cutting angle 220 to form the arcuate cut 212 with an adaptive radius.

Fig. 14 illustrates an example of the ultrasonic cutting blade 100 in the first position 300 and at a first cutting angle 302 (also shown in Fig. 12), while moving the ultrasonic cutting blade 100 along the cut path 218 (e.g., block 1010 of the method 1000) and forming a first arcuate cut 304, for example, a first portion of the arcuate cut 212 (e.g., block 1012 of the method 1000). The first arcuate cut 304 has a first cut radius of curvature 306 based on the first cutting angle 302 of the ultrasonic cutting blade 100.

Fig. 15 illustrates an example of the ultrasonic cutting blade 100 in a second position 308 and at a second cutting angle 310 (also shown in Fig. 12), while moving the ultrasonic cutting blade 100 along the cut path 218 (e.g., block 1010 of the method 1000) and forming a second arcuate cut 312, for example, a second portion of the arcuate cut 212 (e.g., block 1012 of the method 1000). The second arcuate cut 312 has a second cut radius of curvature 314 based on the second cutting angle 310 of the ultrasonic cutting blade 100.

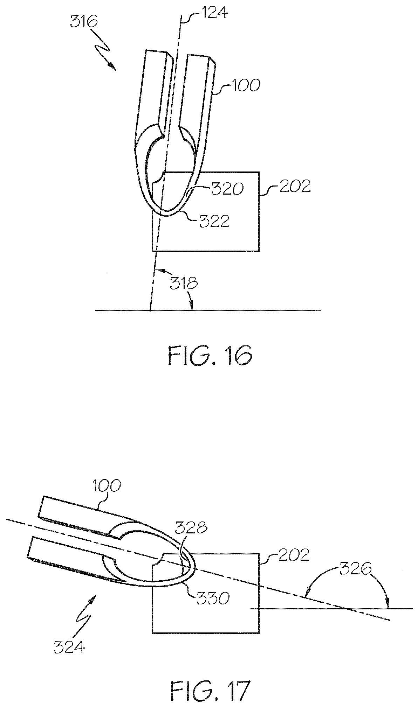

Fig. 16 illustrates an example of the ultrasonic cutting blade 100 in a third position 316 and at a third cutting angle 318 (also shown in Fig. 12), while moving the ultrasonic cutting blade 100 along the cut path 218 (e.g., block 1010 of the method 1000) and forming a third arcuate cut 320, for example, a third portion of the arcuate cut 212 (e.g., block 1012 of the method 1000). The third arcuate cut 320 has a third cut radius of curvature 322 based on the third cutting angle 318 of the ultrasonic cutting blade 100.

Fig. 17 illustrates an example of the ultrasonic cutting blade 100 in a fourth position 324 and at a fourth cutting angle 326 (also shown in Fig. 12), while moving the ultrasonic cutting blade 100 along the cut path 218 (e.g., block 1010 of the method 1000) and forming a fourth arcuate cut 328, for example, a fourth portion of the arcuate cut 212 (e.g., block 1012 of the method 1000). The fourth arcuate cut 328 has a fourth cut radius of curvature 330 based on the fourth cutting angle 326 of the ultrasonic cutting blade 100.

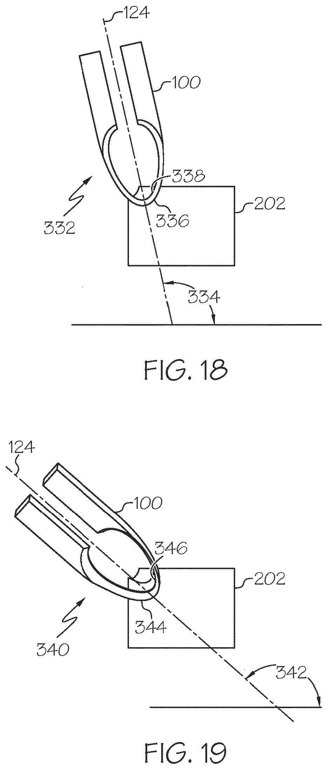

Fig. 18 illustrates an example of the ultrasonic cutting blade 100 in a fifth position 332 and at a fifth cutting angle 334 (also shown in Fig. 12), while moving the ultrasonic cutting blade 100 along the cut path 218 (e.g., block 1010 of the method 1000) and forming a fifth arcuate cut 336, for example, a fifth portion of the arcuate cut 212 (e.g., block 1012 of the method 1000). The fifth arcuate cut 336 has a fifth cut radius of curvature 338 based on the fifth cutting angle 334 of the ultrasonic cutting blade 100.

Fig. 19 illustrates an example of the ultrasonic cutting blade 100 in a sixth position 340 and at a sixth cutting angle 342 (also shown in Fig. 12), while moving the ultrasonic cutting blade 100 along the cut path 218 (e.g., block 1010 of the method 1000) and forming a sixth arcuate cut 344, for example, a sixth portion of the arcuate cut 212 (e.g., block 1012 of the method 1000). The sixth arcuate cut 344 has a sixth cut radius of curvature 346 based on the sixth cutting angle 342 of the ultrasonic cutting blade 100.

It can be appreciated that any number of arcuate cuts (e.g., any number of portions of the arcuate cut 212) can be formed in the workpiece 202 and each one of the arcuate cuts (e.g., each one of the portions of the arcuate cut 212) can have any desired cut radius of curvature 214 between the minimum radius of curvature 114 and the maximum radius of curvature 116 of the ultrasonic cutting blade 100 depending on the cutting angle 220 of the ultrasonic cutting blade 100 while cutting.

Referring to Fig. 20, in one or more examples, the method 1000 includes a step of (block 1018) repositioning the ultrasonic cutting blade 100 relative to the workpiece 202 and, more particularly, relative to a portion of the arcuate cut 212 that was previously formed in the workpiece 202 in order to set a subsequent orientation of the ultrasonic cutting blade 100 and, more particularly, a subsequent orientation of the first edge 110 relative to the workpiece 202. After the step of (block 1018) repositioning, a portion of the method 1000 can be repeated to form a subsequent instance of the arcuate cut 212 over top or at least partially intersecting the first instance of the arcuate cut 212 to form a cut 232 that has a complex contour 234, such as more than one arcuate section (e.g., as shown in Figs. 20B and 21B). As an example, the ultrasonic cutting blade 100 can be repositioned at any point or location along the arcuate cut 212. At the step of (block 1018) repositioning, the ultrasonic cutting blade 100 is oriented at an instance of the cutting angle 220 that is different than the instance of the cutting angle 220 used during the step of (block 1012) forming the arcuate cut 212. In these examples, at one or more locations or along one or more portions of the workpiece 202, the actuate cut 212 has a first instance of the cut radius of curvature 214 made during a first pass of the ultrasonic cutting blade 100 at a first instance of the cutting angle 220 and at one or more locations or along one or more portions of the workpiece 202, the actuate cut 212 has a second instance of the cut radius of curvature 214 made during a second pass of the ultrasonic cutting blade 100 at a second instance of the cutting angle 220.

Figs. 20A and 21A illustrate an example implementation of a portion of the method 1000. More particularly, Figs. 20A and 21A illustrates an example of the ultrasonic cutting blade 100 oriented at different instances of the cutting angle 220 at the same location on the workpiece 202 as the ultrasonic cutting blade 100 makes subsequent passes over the same location.

Fig. 20A illustrates an example of the ultrasonic cutting blade 100 at a location 236 on the workpiece 202 and oriented at a first instance of the cutting angle 220 to form a first arcuate portion 238 of the cut 232 at the location 236. Fig. 20B illustrates an example of the workpiece 202 having the first arcuate portion 238 of the cut 232 formed by the ultrasonic cutting blade 100 at the first instance of the cutting angle 220 shown in Fig. 20A. The first arcuate portion 238 of the cut 232 has first cut-portion radius of curvature 242 based on the first instance of the cutting angle 220 of the ultrasonic cutting blade 100.

Fig. 21A illustrates an example of the ultrasonic cutting blade 100 at the location 236 on the workpiece 202 and at a second instance of the cutting angle 220 to form a second arcuate portion 240 of the cut 232 at the location 236. Fig. 21B illustrates an example of the workpiece 202 having the second arcuate portion 240 of the cut 232 formed by the ultrasonic cutting blade 100 at the second instance of the cutting angle 220 shown in Fig. 21A. The second arcuate portion 240 of the cut 232 has second cut-portion radius of curvature 244 based on the second instance of the cutting angle 220 of the ultrasonic cutting blade 100. The second arcuate portion 240 of the cut 232 is formed over top of or at least partially intersects the first arcuate portion 238 of the cut 232 such that the cut 232 includes the complex contour 234.

It can be appreciated that the above-described portion of the method 1000 can be repeated any number of times and/or at any number of locations on the workpiece 202 such that any number of cuts or any number of portions of an elongated cut can include the complex contour 234 formed by any number of arcuate portions.

Referring to Figs. 1, 11, 21B and 22, in one or more examples, the present disclosure is also directed to the workpiece. 202. In one or more examples, the workpiece 202 includes the arcuate cut 212 (e.g., as shown in Fig. 11), which is formed according to the method 1000 and/or using the ultrasonic cutting system 200. In one or more examples, the workpiece 202 includes the cut 232 having the complex contour 234 (e.g., as shown in Fig. 21B), which is formed according to the method 1000 and/or using the ultrasonic cutting system 200.

Referring generally to Figs. 1-19 and particularly to Fig. 23, by way of examples, the present disclosure is directed to a method 2000 for reducing chatter during an ultrasonic cutting operation, such as during the method 1000. In one or more examples, the method 2000 is implemented or performed using the ultrasonic cutting system 200 that utilizes the ultrasonic cutting blade 100.

Referring to Fig. 23, in one or more examples, the method 2000 includes a step of (block 2002) mounting or coupling the ultrasonic cutting blade 100 to the source 204 of the ultrasonic vibrations 206, such as to the ultrasonic cutting tool 208. In one or more examples, ultrasonic cutting blade 100 is coupled to the source 204 via the blade holder 108. In one or more examples, the method 2000 includes a step of (block 2004) driving the ultrasonic cutting blade 100 via the source 204 of the ultrasonic vibrations 206. In one or more examples, the ultrasonic vibrations 206 are generated by the source 204 (e.g., the ultrasonic cutting tool 208), are transmitted through the blade holder 108 to the ultrasonic cutting blade 100, and travel through and along the ultrasonic cutting blade 100 such that the ultrasonic cutting blade 100 is ultrasonically vibrated. In one or more examples, the method 2000 includes a step of (block 2006) transferring the ultrasonic vibrations 206 through the two contact interfaces 136 between the ultrasonic cutting blade 100 and the blade holder 108 that connects the ultrasonic cutting blade 100 to the source 204 of the ultrasonic vibrations 206 (e.g., the ultrasonic cutting tool 208). In one or more examples, the method 2000 includes a step of (block 2008) ultrasonically cutting the workpiece 202 using the ultrasonic cutting blade 100. In one or more examples, the method 2000 includes a step of (block 2010) reacting to deflection of the ultrasonic cutting blade 100 through the two contact interfaces 136.

Referring now to Figs. 24 and 25, examples of the ultrasonic cutting blade 100, the ultrasonic cutting system 200, the method 1000, the method 2000, and the workpiece 202 having the arcuate cut 212 described herein, may be related to, or used in the context of, an aircraft manufacturing and service method 1100, as shown in the flow diagram of Fig. 24 and an aircraft 1200, as schematically illustrated in Fig. 25. For example, the aircraft 1200 and/or the aircraft production and service method 1100 may include the workpiece 202 that is cut, trimmed, or shaped using the ultrasonic cutting blade 100, the ultrasonic cutting system 200 and/or according to the method 1000 and the method 2000.

In one or more examples, the workpiece 202 is a noodle or radius filler used during fabrication of a composite blade stringer of the aircraft 1200. The noodle is shaped to fill a cavity of the stringer. The ultrasonic cutting blade 100 and the method 1000 allows for creating unique, custom (e.g., wave-like) cuts on noodles to match ramping features of stringers. The curved body 102, having a ring shape design, of the ultrasonic cutting blade 100 allows for uniform wave propagation from a single vibration source. The ultrasonic cutting blade 100 enables a higher wing panel pull-up allowance given that gaps and wrinkles are reduced and, thus, provides better structural integrity. Overall, higher gap pull-up reduces voids between wing-to-spar and rib structures and, thus, eliminate shimming work downstream.

Referring to Fig. 25, which illustrates an example of the aircraft 1200. The aircraft 1200 includes an airframe 1202 having an interior 1206. The aircraft 1200 includes a plurality of onboard systems 1204 (e.g., high-level systems). Examples of the onboard systems 1204 of the aircraft 1200 include propulsion systems 1208, hydraulic systems 1212, electrical systems 1210, and environmental systems 1214. In other examples, the onboard systems 1204 also includes one or more control systems coupled to an airframe 1202 of the aircraft 1200, such as for example, flaps, spoilers, ailerons, slats, rudders, elevators, and trim tabs. In yet other examples, the onboard systems 1204 also includes one or more other systems, such as, but not limited to, communications systems, avionics systems, software distribution systems, network communications systems, passenger information/entertainment systems, guidance systems, radar systems, weapons systems, and the like. The aircraft 1200 may include various other structures made using the workpiece 202 that is cut, trimmed, or shaped using the ultrasonic cutting blade 100, the ultrasonic cutting system 200 and/or according to the method 1000 and the method 2000.

Referring to Fig. 24, during pre-production of the aircraft 1200, the manufacturing and service method 1100 includes specification and design of the aircraft 1200 (block 1102) and material procurement (block 1104). During production of the aircraft 1200, component and subassembly manufacturing (block 1106) and system integration (block 1108) of the aircraft 1200 take place. Thereafter, the aircraft 1200 goes through certification and delivery (block 1110) to be placed in service (block 1112). Routine maintenance and service (block 1114) includes modification, reconfiguration, refurbishment, etc. of one or more systems of the aircraft 1200.

Each of the processes of the manufacturing and service method 1100 illustrated in Fig. 22 may be performed or carried out by a system integrator, a third party, and/or an operator (e.g., a customer). For the purposes of this description, a system integrator may include, without limitation, any number of spacecraft manufacturers and major-system subcontractors; a third party may include, without limitation, any number of vendors, subcontractors, and suppliers; and an operator may be an airline, leasing company, military entity, service organization, and so on.

Examples of the ultrasonic cutting blade 100, the ultrasonic cutting system 200, the method 1000, the method 2000, and the workpiece 202 having the arcuate cut 212 shown and described herein, may be employed during any one or more of the stages of the manufacturing and service method 1100 shown in the flow diagram illustrated by Fig. 22. In an example, making the workpiece 202 that is cut, trimmed, or shaped using the ultrasonic cutting blade 100 or the ultrasonic cutting system 200 and/or according to the method 1000 and the method 2000 may form a portion of component and subassembly manufacturing (block 1106) and/or system integration (block 1108). Further, the workpiece 202 that is cut, trimmed, or shaped using the ultrasonic cutting blade 100 or the ultrasonic cutting system 200 and/or according to the method 1000 and the method 2000 may be implemented in a manner similar to components or subassemblies prepared while the aircraft 1200 is in service (block 1112). Also, the workpiece 202 that is cut, trimmed, or shaped using the ultrasonic cutting blade 100 or the ultrasonic cutting system 200 and/or according to the method 1000 and the method 2000 may be utilized during system integration (block 1108) and certification and delivery (block 1110). Similarly, the workpiece 202 that is cut, trimmed, or shaped using the ultrasonic cutting blade 100 or the ultrasonic cutting system 200 and/or according to the method 1000 and the method 2000 may be utilized, for example and without limitation, while the aircraft 1200 is in service (block 1112) and during maintenance and service (block 1114).

The preceding detailed description refers to the accompanying drawings, which illustrate specific examples described by the present disclosure. Other examples having different structures and operations do not depart from the scope of the present disclosure. Like reference numerals may refer to the same feature, element, or component in the different drawings. Throughout the present disclosure, any one of a plurality of items may be referred to individually as the item and a plurality of items may be referred to collectively as the items and may be referred to with like reference numerals. Moreover, as used herein, a feature, element, component, or step preceded with the word "a" or "an" should be understood as not excluding a plurality of features, elements, components, or steps, unless such exclusion is explicitly recited.

Illustrative, non-exhaustive examples, which may be, but are not necessarily, claimed, of the subject matter according to the present disclosure are provided above. Reference herein to "example" means that one or more feature, structure, element, component, characteristic, and/or operational step described in connection with the example is included in at least one aspect, embodiment, and/or implementation of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, device, structure, article, element, component, or hardware "configured to" perform a specified function is indeed capable of performing the specified function without any alteration, rather than merely having potential to perform the specified function after further modification. In other words, the system, apparatus, device, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, device, structure, article, element, component, or hardware described as being "configured to" perform a particular function may additionally or alternatively be described as being "adapted to" and/or as being "operative to" perform that function.

Unless otherwise indicated, the terms "first," "second," "third," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

As used herein, the phrase "at least one of", when used with a list of items, means different combinations of one or more of the listed items may be used and only one of each item in the list may be needed. For example, "at least one of item A, item B, and item C" may include, without limitation, item A or item A and item B. This example also may include item A, item B, and item C, or item B and item C. In other examples, "at least one of" may be, for example, without limitation, two of item A, one of item B, and ten of item C; four of item B and seven of item C; and other suitable combinations. As used herein, the term "and/or" and the "/" symbol includes any and all combinations of one or more of the associated listed items.

For the purpose of this disclosure, the terms "coupled," "coupling," and similar terms refer to two or more elements that are joined, linked, fastened, attached, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the term "approximately" refers to or represent a condition that is close to, but not exactly, the stated condition that still performs the desired function or achieves the desired result. As an example, the term "approximately" refers to a condition that is within an acceptable predetermined tolerance or accuracy, such as to a condition that is within 10% of the stated condition. However, the term "approximately" does not exclude a condition that is exactly the stated condition. As used herein, the term "substantially" refers to a condition that is essentially the stated condition that performs the desired function or achieves the desired result.

Figs. 1-21 and 25, referred to above, may represent functional elements, features, or components thereof and do not necessarily imply any particular structure. Accordingly, modifications, additions and/or omissions may be made to the illustrated structure. Additionally, those skilled in the art will appreciate that not all elements, features, and/or components described and illustrated in Figs. 1-21 and 25, referred to above, need be included in every example and not all elements, features, and/or components described herein are necessarily depicted in each illustrative example. Accordingly, some of the elements, features, and/or components described and illustrated in Figs. 1-21 and 25 may be combined in various ways without the need to include other features described and illustrated in Figs. 1-21 and25, other drawing figures, and/or the accompanying disclosure, even though such combination or combinations are not explicitly illustrated herein. Similarly, additional features not limited to the examples presented, may be combined with some or all of the features shown and described herein. Unless otherwise explicitly stated, the schematic illustrations of the examples depicted in Figs. 1-21 and 25, referred to above, are not meant to imply structural limitations with respect to the illustrative example. Rather, although one illustrative structure is indicated, it is to be understood that the structure may be modified when appropriate. Accordingly, modifications, additions and/or omissions may be made to the illustrated structure. Furthermore, elements, features, and/or components that serve a similar, or at least substantially similar, purpose are labeled with like numbers in each of Figs. 1-21 and25, and such elements, features, and/or components may not be discussed in detail herein with reference to each of Figs. 1-21 and25. Similarly, all elements, features, and/or components may not be labeled in each of Figs. 1-21 and 25, but reference numerals associated therewith may be utilized herein for consistency.

In Figs. 22-24, referred to above, the blocks may represent operations, steps, and/or portions thereof and lines connecting the various blocks do not imply any particular order or dependency of the operations or portions thereof. It will be understood that not all dependencies among the various disclosed operations are necessarily represented. Figs. 22-24 and the accompanying disclosure describing the operations of the disclosed methods set forth herein should not be interpreted as necessarily determining a sequence in which the operations are to be performed. Rather, although one illustrative order is indicated, it is to be understood that the sequence of the operations may be modified when appropriate. Accordingly, modifications, additions and/or omissions may be made to the operations illustrated and certain operations may be performed in a different order or simultaneously. Additionally, those skilled in the art will appreciate that not all operations described need be performed.

Further, references throughout the present specification to features, advantages, or similar language used herein do not imply that all of the features and advantages that may be realized with the examples disclosed herein should be, or are in, any single example. Rather, language referring to the features and advantages is understood to mean that a specific feature, advantage, or characteristic described in connection with an example is included in at least one example. Thus, discussion of features, advantages, and similar language used throughout the present disclosure may, but do not necessarily, refer to the same example.

The described features, advantages, and characteristics of one example may be combined in any suitable manner in one or more other examples. One skilled in the relevant art will recognize that the examples described herein may be practiced without one or more of the specific features or advantages of a particular example. In other instances, additional features and advantages may be recognized in certain examples that may not be present in all examples. Furthermore, although various examples of the ultrasonic cutting blade 100, the ultrasonic cutting system 200, the method 1000, the method 200, and the workpiece 202 having the arcuate cut 212 with an adaptive or varying cut radius of curvature 214 have been shown and described, modifications may occur to those skilled in the art upon reading the specification. The present application includes such modifications and is limited only by the scope of the claims.

## Claims

1. An ultrasonic cutting blade (100) comprising:
a first end (104);
a second end (106); and
a curved body (102) that extends between the first end (104) and the second end (106),
wherein:
the curved body (102) comprises a first edge (110) that is configured to contact a workpiece (202) for performing a cutting operation on the workpiece (202); and
the curved body (102) comprises a radius of curvature (112) that varies between a minimum radius of curvature (114) and a maximum radius of curvature (116).

2. The ultrasonic cutting blade (100) of Claim 1, wherein the curved body (102) is axisymmetric.

3. The ultrasonic cutting blade (100) of Claim 1 or 2, wherein:
the curved body (102) comprises:
a first arcuate section (118) that extends from the first end (104) to a vertex (122) of the curved body (102); and
a second arcuate section (120) that extends from the vertex (122) to the second end (106);
the minimum radius of curvature (114) is at the vertex (122); and
the maximum radius of curvature (116) is proximate at least one of the first end (104) and the second end (106).

4. The ultrasonic cutting blade (100) of any one of the preceding claims, wherein:
the radius of curvature (112) increases linearly from the minimum radius of curvature (114) to the maximum radius of curvature (116); or
the radius of curvature (112) increases exponentially from the minimum radius of curvature (114) to the maximum radius of curvature (116).

5. The ultrasonic cutting blade (100) of any one of the preceding claims, further comprising:
a longitudinal axis (124);
a second edge (126) that is opposite the first edge (110); and
a surface (128) that extends between the first edge (110) and the second edge (126),
wherein:
the second edge (126) is spaced away from the first edge (110) along the longitudinal axis (124); and
the surface (128) is oriented at oblique angle relative to the longitudinal axis (124), and preferably wherein:
the surface (128) is concave.

6. The ultrasonic cutting blade (100) of any one of the preceding claims, wherein the maximum radius of curvature (116) is at least 2 times, 4 times, 5 times, 7 times, and/or 10 times greater than the minimum radius of curvature (114).

7. The ultrasonic cutting blade (100) of any one of the preceding claims, wherein:
The minimum radius of curvature (114) is approximately 6.35 mm (approximately 0.25 inch); and
the maximum radius of curvature (116) is up to approximately 38.1 mm (approximately 1.5 inches).

8. The ultrasonic cutting blade (100) of any one of the preceding claims, wherein:
the first edge (110) is configured to make an arcuate cut (212) in the workpiece (202) in response to moving the ultrasonic cutting blade (100) along a cut path (218);
the arcuate cut (212) has a cut radius of curvature (214); and
the cut radius of curvature (214) is between the minimum radius of curvature (114) and the maximum radius of curvature (116) based on a cutting angle (220) of the curved body (102) relative to a workpiece surface (216) of the workpiece (202).

9. The ultrasonic cutting blade (100) of any one of the preceding claims, further comprising:
a first shank (132) extending from the first end (104) of the curved body (102); and
a second shank (134) extending from the second end (106) of the curved body (102),
wherein the first shank (132) and the second shank (134) are couplable to a blade holder (108) that couples the ultrasonic cutting blade (100) to a source (204) of ultrasonic vibrations (206).

10. An ultrasonic cutting system (200) comprising:
an ultrasonic cutting blade (100) according to any one of the preceding claims; and
an ultrasonic cutting tool (208) that transmits ultrasonic vibrations (206) to the ultrasonic cutting blade (100).

11. The ultrasonic cutting system (200) of Claim 10, further comprising a blade holder (108) that couples the ultrasonic cutting blade (100) to the ultrasonic cutting tool (208).

12. The ultrasonic cutting system (200) of Claim 11, further comprising:
at least one of an articulated robot (210) and a gantry (222) that moves the ultrasonic cutting tool (208).

13. The ultrasonic cutting system (200) of Claim 11 or 12, wherein:
the ultrasonic cutting blade (100) further comprises:
a first shank (132) extending from the first end (104) of the curved body (102); and
a second shank (134) extending from the second end (106) of the curved body (102);
the blade holder (108) comprises a tang (142); and
the first shank (132) and the second shank (134) are coupled to the tang (142).

14. A method (1000) for cutting a workpiece (202), the method (1000) comprising steps of:
positioning an ultrasonic cutting blade (100) according to any one of claims 1 to 9 at a cutting angle (220) relative to a workpiece surface (216) of the workpiece (202);
moving the ultrasonic cutting blade (100) along cut path (218) to form an arcuate cut (212);
during the moving, changing the cutting angle (220) of the ultrasonic cutting blade (100); and
varying a cut radius of curvature (214) of the arcuate cut (212) between a minimum radius of curvature (114) and a maximum radius of curvature (116) based on the changing of the cutting angle (220).

15. A workpiece (202) comprising an arcuate cut (212) formed according to the method (1000) of Claim 14.

## Patentansprüche

1. Ultraschallschneidklinge (100), umfassend:
ein erstes Ende (104);
ein zweites Ende (106); und
einen gekrümmten Körper (102), der sich zwischen dem ersten Ende (104) und dem zweiten Ende (106) erstreckt, wobei:
der gekrümmte Körper (102) eine erste Kante (110) umfasst, die konfiguriert ist, um ein Werkstück (202) zu kontaktieren, um einen Schneidvorgang an dem Werkstück (202) durchzuführen; und
der gekrümmte Körper (102) einen Krümmungsradius (112) umfasst, der zwischen einem minimalen Krümmungsradius (114) und einem maximalen Krümmungsradius (116) variiert.

2. Ultraschallschneidklinge (100) nach Anspruch 1, wobei der gekrümmte Körper (102) achsensymmetrisch ist.

3. Ultraschallschneidklinge (100) nach Anspruch 1 oder 2, wobei:
der gekrümmte Körper (102) umfasst:
einen ersten bogenförmigen Abschnitt (118), der sich von dem ersten Ende (104) zu einem Scheitelpunkt (122) des gekrümmten Körpers (102) erstreckt; und
einen zweiten bogenförmigen Abschnitt (120), der sich von dem Scheitelpunkt (122) zu dem zweiten Ende (106) erstreckt;
der minimale Krümmungsradius (114) sich an dem Scheitelpunkt (122) befindet; und
der maximale Krümmungsradius (116) sich nahe mindestens einem von dem ersten Ende (104) und dem zweiten Ende (106) befindet.

4. Ultraschallschneidklinge (100) nach einem der vorstehenden Ansprüche, wobei:
der Krümmungsradius (112) von dem minimalen Krümmungsradius (114) bis zu dem maximalen Krümmungsradius (116) linear zunimmt; oder
der Krümmungsradius (112) von dem minimalen Krümmungsradius (114) bis zu dem maximalen Krümmungsradius (116) exponentiell zunimmt.

5. Ultraschallschneidklinge (100) nach einem der vorstehenden Ansprüche, ferner umfassend:
eine Längsachse (124);
eine zweite Kante (126), die der ersten Kante (110) gegenüberliegt; und
eine Oberfläche (128), die sich zwischen der ersten Kante (110) und der zweiten Kante (126) erstreckt, wobei:
die zweite Kante (126) von der ersten Kante (110) entlang der Längsachse (124) beabstandet ist; und
die Oberfläche (128) in einem schrägen Winkel relativ zu der Längsachse (124) ausgerichtet ist, und vorzugsweise wobei:
die Oberfläche (128) konkav ist.

6. Ultraschallschneidklinge (100) nach einem der vorstehenden Ansprüche, wobei der maximale Krümmungsradius (116) mindestens 2-mal, 4-mal, 5-mal, 7-mal und/oder 10-mal größer als der minimale Krümmungsradius (114) ist.

7. Ultraschallschneidklinge (100) nach einem der vorstehenden Ansprüche, wobei:
der minimale Krümmungsradius (114) etwa 6,35 mm (etwa 0,25 Zoll) beträgt; und
der maximale Krümmungsradius (116) bis zu etwa 38,1 mm (etwa 1,5 Zoll) beträgt.

8. Ultraschallschneidklinge (100) nach einem der vorstehenden Ansprüche, wobei:
die erste Kante (110) konfiguriert ist, um als Reaktion auf ein Bewegen der Ultraschallschneidklinge (100) entlang eines Schnittpfads (218) einen bogenförmigen Schnitt (212) in dem Werkstück (202) auszuführen;
der bogenförmige Schnitt (212) einen Schnittkrümmungsradius (214) aufweist; und
der Schnittkrümmungsradius (214) zwischen dem minimalen Krümmungsradius (114) und dem maximalen Krümmungsradius (116) basierend auf einem Schnittwinkel (220) des gekrümmten Körpers (102) relativ zu einer Werkstückoberfläche (216) des Werkstücks (202) liegt.

9. Ultraschallschneidklinge (100) nach einem der vorstehenden Ansprüche, ferner umfassend:
einen ersten Schaft (132), der sich von dem ersten Ende (104) des gekrümmten Körpers (102) erstreckt; und
einen zweiten Schaft (134), der sich von dem zweiten Ende (106) des gekrümmten Körpers (102) erstreckt,
wobei der erste Schaft (132) und der zweite Schaft (134) mit einem Klingenhalter (108) koppelbar sind, der die Ultraschallschneidklinge (100) mit einer Quelle (204) von Ultraschallschwingungen (206) koppelt.

10. Ultraschallschneidsystem (200), umfassend:
eine Ultraschallschneidklinge (100) nach einem der vorstehenden Ansprüche; und
ein Ultraschallschneidwerkzeug (208), das Ultraschallschwingungen (206) auf die Ultraschallschneidklinge (100) überträgt.

11. Ultraschallschneidsystem (200) nach Anspruch 10, ferner umfassend einen Klingenhalter (108), der die Ultraschallschneidklinge (100) mit dem Ultraschallschneidwerkzeug (208) koppelt.

12. Ultraschallschneidsystem (200) nach Anspruch 11, ferner umfassend:
mindestens eines von einem Gelenkroboter (210) und einem Portal (222), das das Ultraschallschneidwerkzeug (208) bewegt.

13. Ultraschallschneidsystem (200) nach Anspruch 11 oder 12, wobei:
die Ultraschallschneidklinge (100) ferner umfasst:
einen ersten Schaft (132), der sich von dem ersten Ende (104) des gekrümmten Körpers (102) erstreckt; und
einen zweiten Schaft (134), der sich von dem zweiten Ende (106) des gekrümmten Körpers (102) erstreckt;
der Klingenhalter (108) einen Zapfen (142) umfasst; und
der erste Schaft (132) und der zweite Schaft (134) an den Zapfen (142) gekoppelt sind.

14. Verfahren (1000) zum Schneiden eines Werkstücks (202), das Verfahren (1000) umfassend die Schritte:
Positionieren einer Ultraschallschneidklinge (100) nach einem der Ansprüche 1 bis 9 in einem Schneidwinkel (220) relativ zu einer Werkstückoberfläche (216) des Werkstücks (202);
Bewegen der Ultraschallschneidklinge (100) entlang des Schnittpfads (218), um einen bogenförmigen Schnitt (212) auszubilden;
während des Bewegens, Ändern des Schneidwinkels (220) der Ultraschallschneidklinge (100); und
Variieren eines Schnittkrümmungsradius (214) des bogenförmigen Schnitts (212) zwischen einem minimalen Krümmungsradius (114) und einem maximalen Krümmungsradius (116) basierend auf dem Ändern des Schnittwinkels (220).

15. Werkstück (202), umfassend einen bogenförmigen Schnitt (212), der gemäß dem Verfahren (1000) nach Anspruch 14 ausgebildet ist.

## Revendications

1. Lame de coupe à ultrasons (100) comprenant :
une première extrémité (104) ;
une seconde extrémité (106) ; et
un corps incurvé (102) qui s'étend entre la première extrémité (104) et la seconde extrémité (106), dans laquelle :
le corps incurvé (102) comprend un premier bord (110) qui est configuré pour entrer en contact avec une pièce à usiner (202) pour effectuer une opération de coupe sur la pièce à usiner (202) ; et
le corps incurvé (102) comprend un rayon de courbure (112) qui varie entre un rayon de courbure minimal (114) et un rayon de courbure maximal (116).

2. Lame de coupe à ultrasons (100) selon la revendication 1, dans laquelle le corps incurvé (102) est axisymétrique.

3. Lame de coupe à ultrasons (100) selon la revendication 1 ou 2, dans lequel :
le corps incurvé (102) comprend :
une première section arquée (118) qui s'étend de la première extrémité (104) jusqu'à un sommet (122) du corps incurvé (102) ; et
une seconde section arquée (120) qui s'étend du sommet (122) à la seconde extrémité (106) ;
le rayon de courbure minimal (114) est au niveau du sommet (122) ; et
le rayon de courbure maximal (116) est à proximité d'au moins l'une parmi la première extrémité (104) et la seconde extrémité (106).

4. Lame de coupe à ultrasons (100) selon l'une quelconque des revendications précédentes, dans laquelle :
le rayon de courbure (112) augmente linéairement du rayon de courbure minimal (114) au rayon de courbure maximal (116) ; ou
le rayon de courbure (112) augmente exponentiellement du rayon de courbure minimal (114) au rayon de courbure maximal (116).

5. Lame de coupe à ultrasons (100) selon l'une quelconque des revendications précédentes, comprenant en outre :
un axe longitudinal (124) ;
un second bord (126) opposé au premier bord (110) ; et
une surface (128) qui s'étend entre le premier bord (110) et le second bord (126), dans laquelle :
le second bord (126) est espacé du premier bord (110) le long de l'axe longitudinal (124) ; et
la surface (128) est orientée selon un angle oblique par rapport à l'axe longitudinal (124), et de préférence dans laquelle :
la surface (128) est concave.

6. Lame de coupe à ultrasons (100) selon l'une quelconque des revendications précédentes, dans laquelle le rayon de courbure maximal (116) est au moins 2 fois, 4 fois, 5 fois, 7 fois, et/ou 10 fois supérieur au rayon de courbure minimal (114).

7. Lame de coupe à ultrasons (100) selon l'une quelconque des revendications précédentes, dans laquelle :
le rayon de courbure minimal (114) est approximativement 6,35 mm (approximativement 0,25 pouce) ; et
le rayon de courbure maximal (116) va jusqu'à approximativement 38,1 mm (approximativement 1,5 pouces).

8. Lame de coupe à ultrasons (100) selon l'une quelconque des revendications précédentes, dans laquelle :
le premier bord (110) est conçu pour réaliser une coupe arquée (212) dans la pièce à usiner (202) en réponse au déplacement de la lame de coupe à ultrasons (100) le long d'un chemin de coupe (218) ;
la coupe arquée (212) a un rayon de courbure de coupe (214) ; et
le rayon de courbure de coupe (214) est compris entre le rayon de courbure minimal (114) et le rayon de courbure maximal (116) en fonction d'un angle de coupe (220) du corps incurvé (102) par rapport à une surface de pièce à usiner (216) de la pièce à usiner (202).

9. Lame de coupe à ultrasons (100) selon l'une quelconque des revendications précédentes, comprenant en outre :
une première tige (132) s'étendant à partir de la première extrémité (104) du corps incurvé (102) ; et
une seconde tige (134) s'étendant à partir de la seconde extrémité (106) du corps incurvé (102),
dans laquelle la première tige (132) et la seconde tige (134) peuvent être accouplées à un porte-lame (108) qui accouple la lame de coupe à ultrasons (100) à une source (204) de vibrations ultrasoniques (206).

10. Système de coupe à ultrasons (200) comprenant :
une lame de coupe à ultrasons (100) selon l'une quelconque des revendications précédentes ; et
un outil de coupe à ultrasons (208) qui transmet des vibrations ultrasoniques (206) à la lame de coupe à ultrasons (100).

11. Système de coupe à ultrasons (200) selon la revendication 10, comprenant en outre un porte-lame (108) qui couple la lame de coupe à ultrasons (100) à l'outil de coupe à ultrasons (208).

12. Système de coupe à ultrasons (200) selon la revendication 11, comprenant en outre :
au moins l'un parmi un robot articulé (210) et un portique (222) qui déplace l'outil de coupe à ultrasons (208).

13. Système de coupe à ultrasons (200) selon la revendication 11 ou 12, dans lequel :
la lame de coupe à ultrasons (100) comprend en outre :
une première tige (132) s'étendant à partir de la première extrémité (104) du corps incurvé (102) ; et
une seconde tige (134) s'étendant à partir de la seconde extrémité (106) du corps incurvé (102) ;
le porte-lame (108) comprend une soie (142) ; et
la première tige (132) et la seconde tige (134) sont couplées à la soie (142).

14. Procédé (1000) de coupe d'une pièce à usiner (202), le procédé (1000) comprenant les étapes consistant à :
positionner une lame de coupe à ultrasons (100) selon l'une quelconque des revendications 1 à 9 à un angle de coupe (220) par rapport à une surface de pièce à usiner (216) de la pièce à usiner (202) ;
déplacer la lame de coupe à ultrasons (100) le long de la trajectoire de coupe (218) pour former une coupe arquée (212) ;
pendant le déplacement, modifier l'angle de coupe (220) de la lame de coupe à ultrasons (100) ; et
faire varier un rayon de courbure de coupe (214) de la coupe arquée (212) entre un rayon de courbure minimal (114) et un rayon de courbure maximal (116) en fonction du changement de l'angle de coupe (220).

15. Pièce à usiner (202) comprenant une coupe arquée (212) formée selon le procédé (1000) de la revendication 14.
